# EUROPEAN PATENT APPLICATION

(11) **EP 2 431 585 A1**
(43) Date of publication of application: **21.03.2012**
(21) Application number: 09812409.2
(22) Date of filing: 15.05.2009
(51) Int. Cl.: F01N 3/24, F01N 3/20

(54) **EXHAUST EMISSION CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: OTSUBO, Yasuhiko, Toyota-shi Aichi 471-8571 (JP)
(74) Representative: Kuhnen & Wacker
(86) International application number: PCT/JP2009/059391
(87) International publication number: WO 2010/131374

(57) **Abstract**

An exhaust purification apparatus for an internal combustion engine comprises a first oxidation catalyst arranged in an exhaust passage of an engine, a mixer arranged on the downstream side of the first oxidation catalyst, and a second oxidation catalyst arranged on the downstream side of the mixer. A repetitive control is carried out in such a way that a period in which an air-fuel ratio of exhaust gas discharged from an engine body is rich and a period in which the air-fuel ratio is lean are alternately repeated when the temperature of the second oxidation catalyst is to be increased, so that a part of the unburnt fuel contained in a rich exhaust gas discharged from the engine body and a lean exhaust gas discharged from the engine body are mixed in the mixer after passing through the first oxidation catalyst and are subject to oxidization in the second oxidation catalyst.

## Description

### Technical Field

The present invention relates to a system for purifying exhaust gas of an internal combustion engine.

### Background Art

Exhaust gas discharged from an internal combustion engine, such as a diesel engine or gasoline engine contains components, such as, carbon monoxide (CO), unburnt fuel (HC), nitrogen oxide (NOx), or particulate matter (PM). An internal combustion engine is provided with an exhaust purification apparatus to purify these components.

A particulate filter is provided in an exhaust passage of an internal combustion engine to remove particulate matter contained in the exhaust gas. The particulate matter is collected by and deposited on the particulate filter. When the amount of the deposited particulate matter exceeds an allowable value, the particulate filter is regenerated by removing the particulate matter therefrom. In order to regenerate the particulate filter, the temperature thereof is increased in an air-rich atmosphere to thereby burn the particulate matter.

Japanese Unexamined Patent Publication No. 2004-52611 discloses an exhaust purification apparatus for an internal combustion engine, in which four cylinders are divided into two groups consisting of a cylinder group "A" and a cylinder group "B", and an oxidation catalyst and a NOx trap catalyst are arranged in each of the cylinder groups "A" and "B". A particulate trap is arranged in an exhaust passage on the downstream side of the joining portion at which the respective exhaust passages of the cylinder groups are joined. In this publication, it is described that when the NOx trap catalyst is regenerated, post-injection is carried out in one of the cylinder groups to enrich the air-fuel ratio of the exhaust gas, and the air-fuel ratio of the exhaust gas in the other cylinder group is made lean. As a result, when the NOx trap catalyst is regenerated, the air-fuel ratio of the exhaust gas flowing into the particulate trap is lean so that the particulates burn.

The oxidation catalyst has a specific activation temperature at which the oxidization of unburnt fuel, etc., is activated. It is necessary to raise the temperature of the oxidation catalyst to the activation temperature or above, for example when the engine starts up. The oxidation catalyst can be heated by the exhaust gas. The heat of the exhaust gas discharged from the engine body is absorbed by the components of the exhaust passage of the engine body, or radiated into the atmosphere. Consequently, when the oxidation catalyst is located away from the engine body, it takes a long time to increase the temperature of the oxidation catalyst at the starting up of the internal combustion engine.

As disclosed in Japanese Unexamined Patent Publication No. 2004-52611 mentioned above, it is possible to increase the temperature of the oxidation catalyst to the activation temperature or more within a short period of time by arranging the oxidation catalyst close to the main body of the internal combustion engine, if the temperatures of the main body of the engine or the components of the exhaust passage are low. As a result, it is possible for the unburnt fuel, etc., contained in the exhaust gas to quickly begin oxidizing.

In this regard the exhaust treatment device arranged in the exhaust purification apparatus is sometimes heated to a higher temperature than that of a normal operation of engine for a prescribed purpose. If the oxidation catalyst is arranged on the upstream side of the exhaust treatment device to be heated, the temperature of the exhaust gas can be increased by the heat of oxidization reaction in oxidation catalyst. The exhaust treatment device can be heated by the exhaust gas whose temperature has been raised.

For example, if a particulate filter is provided in the exhaust passage, it is necessary to increase the temperature of the particulate filter when it is regenerated. If the oxidation catalyst is arranged on the upstream side of the particulate filter, the unburnt fuel is fed to the oxidation catalyst to increase the temperature of the exhaust gas due to the heat of oxidization reaction. The particulate filter can be heated by the high temperature exhaust gas.

If the oxidation catalyst is arranged in the vicinity of the main body of the engine, the distance between the oxidation catalyst and the particulate filter may be increased. The exhaust gas which has been heated by the oxidation catalyst reduces the temperature before the exhaust gas reaches the particulate filter. Therefore, if the temperature of the exhaust gas is increased by the oxidation catalyst which is arranged in the vicinity of the engine main body, the temperature of the exhaust gas at the outlet of the oxidation catalyst must be increased to a temperature above the regenerating temperature of the particulate filter.

However, the thermal deterioration of the oxidation catalyst increases as the temperature thereof increases. Due to this fact, if the temperature of the exhaust treatment device arranged on the downstream side of the oxidation catalyst is increased by the heat of oxidization reaction, the thermal deterioration of the oxidation catalyst is accelerated. The accelerated thermal deterioration of the oxidation catalyst, for example, reduces the oxidizing speed or increases the activation temperature. Under these circumstances, it is preferable that the thermal deterioration of the oxidation catalyst be minimized.

### Disclosure of Invention

It is an object of the present invention to provide an exhaust purification apparatus for an internal combustion engine, wherein thermal deterioration of an oxidation catalyst arranged in an exhaust passage of the engine is restricted.

A first exhaust purification apparatus for internal combustion engine according to the present invention comprises a first oxidation catalyst arranged in an exhaust passage of an engine, a mixer arranged in the exhaust passage on the downstream side of the first oxidation catalyst, and a second oxidation catalyst arranged in the exhaust passage on the downstream side of the mixer. A repetitive control is carried out in such a way that a period in which an air-fuel ratio of exhaust gas discharged from an engine body is rich and a period in which the air-fuel ratio of the exhaust gas discharged from the engine body is lean are alternately repeated when the temperature of the second oxidation catalyst is to be increased, so that a part of the unburnt fuel contained in exhaust gas discharged from the engine body and whose air-fuel ratio is rich and exhaust gas discharged from the engine body and whose air-fuel ratio is lean are mixed in the mixer after passing through the first oxidation catalyst, and the mixed exhaust gases are subject to oxidization in the second oxidation catalyst. By adapting this configuration thermal deterioration of the oxidation catalyst arranged in an exhaust passage of engine can be restricted.

In the above-described invention, the mixer may comprise a turbine of a super charger.

In the above-described invention, the repetitive control is preferably carried out to control the duration in which the air-fuel ratio of the exhaust gas discharged from the engine body is rich and the degree of the air-fuel ratio of the exhaust gas as well as the duration in which the air-fuel ratio of the exhaust gas discharged from the engine body is lean and the degree of the air-fuel ratio of the exhaust gas, so that the air-fuel ratio of the exhaust gas discharged from the mixer is lean. By adapting this configuration it is possible to suppress the outflow of the unburnt fuel from the second oxidation catalyst without being oxidized.

In the above-described invention, the purification apparatus can comprise an exhaust treatment device arranged in the exhaust passage on the downstream side of the second oxidation catalyst, the exhaust treatment device comprising at least one of a particulate filter which can trap particulate substances and whose temperature must be increased to burn the accumulated particulate substances and a NOx storage and reduction catalyst which can hold NOx through at least one of storage and adsorption and whose temperature must be increased to emit SOx held with in the NOx through at least one of storage and adsorption.

A second exhaust purification apparatus for internal combustion engine according to the present invention comprises a first oxidation catalyst arranged in an exhaust passage of an engine, and a second oxidation catalyst arranged in the exhaust passage on the downstream side of the first oxidation catalyst and capable of storing an oxygen. An iterative control is carried out in such a way that a period in which an air-fuel ratio of exhaust gas discharged from an engine body is rich and a period in which the air-fuel ratio of the exhaust gas discharged from the engine body is lean are alternately repeated when the temperature of the second oxidation catalyst is to be increased, so that a part of the unburnt fuel contained in exhaust gas which is discharged from the engine body and whose air-fuel ratio is rich is subject to oxidization with an oxygen stored in the second oxidation catalyst after passing through the first oxidation catalyst. By adapting this configuration thermal deterioration of the oxidation catalyst arranged in an exhaust passage of engine can be restricted.

In the above-described invention, the iterative control is preferably carried out to control the duration in which the air-fuel ratio of the exhaust gas discharged from the engine body is rich and the degree of the air-fuel ratio of the exhaust gas as well as the duration in which the air-fuel ratio of the exhaust gas discharged from the engine body is lean and the degree of the air-fuel ratio of the exhaust gas, so that the second oxidation catalyst stores an oxygen when the air-fuel ratio of the exhaust gas is lean and oxidizes the almost all of the unburnt fuel entering in the second oxidation catalyst with the stored oxygen when the air-fuel ratio of the exhaust gas is rich. By adapting this configuration it is possible to suppress the outflow of the unburnt fuel from the second oxidation catalyst without being oxidized.

In the above-described invention, the purification apparatus can comprise an exhaust treatment device arranged in the exhaust passage on the downstream side of the second oxidation catalyst, the exhaust treatment device comprising at least one of a particulate filter which can trap particulate substances and whose temperature must be increased to burn the accumulated particulate substances and a NOx storage and reduction catalyst which can hold NOx through at least one of storage and adsorption and whose temperature must be increased to emit SOx held with in the NOx through at least one of storage and adsorption.

### Brief Description of the Drawings

FIG. 1 is a schematic view generally showing an internal combustion engine according to Embodiment 1 of the present invention.
FIG. 2 is a schematic sectional view of a particulate filter.
FIG. 3 is a time chart of a repetitive control when the temperature of a particulate filter is increased in Embodiment 1.
FIG. 4 is an explanatory view of an injection pattern in normal operation of an engine.
FIG. 5 is an explanatory view of a fuel injection pattern to make a rich air-fuel ratio of exhaust gas discharged from a combustion chamber.
FIG. 6 is an enlarged time chart of a repetitive control when the temperature of a particulate filter is increased in Embodiment 1.
FIG. 7 is a general sectional view of a turbine of a super charger.
FIG. 8 is a sectional view taken along the line A-A in FIG. 7.
FIG. 9 is a time chart of a control in a comparative example when the temperature of a particulate filter is increased in Embodiment 1.
FIG. 10 is an explanatory view of the temperature of exhaust gas when a repetitive control or a control of a comparative example is carried out in Embodiment 1.
FIG. 11 is a graph illustrating the relationship between a cycle time and respective oxidation catalyst bed temperatures when a repetitive control is carried out in Embodiment 1.
FIG. 12 is an enlarged schematic sectional view of a NOx storage-reduction catalyst.
FIG. 13 is an explanatory view of another fuel injection pattern to make a rich air-fuel ratio of exhaust gas discharged from a combustion chamber.
FIG. 14 is a schematic view of an internal combustion engine according to Embodiment 2 of the present invention.
FIG. 15 is a graph illustrating a relationship between a cycle time and respective oxidation catalyst bed temperatures when iterative control is carried out in Embodiment 2.
FIG. 16 is an explanatory view of a fuel injection pattern in respective combustion chambers when a second iterative control is carried out in Embodiment 2.

### Best Mode for Carrying out the Invention

### Embodiment 1

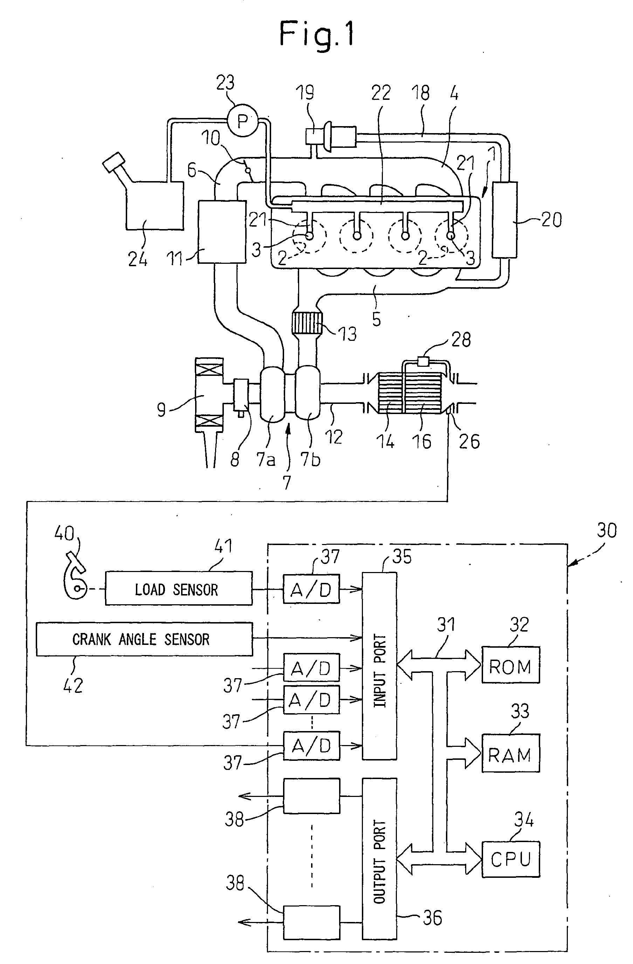

With reference to FIGS. 1 to 13, an exhaust purification apparatus for an internal combustion engine according to Embodiment 1 will be discussed below. The internal combustion engine according to this embodiment is installed in a vehicle. This embodiment is applied to a compression ignition diesel engine provided in an automobile, by way of example.

FIG. 1 shows the entirety of the internal combustion engine according to the embodiment. The internal combustion engine has an engine main body 1. Also, the internal combustion engine has an exhaust purification apparatus for purifying exhaust gas. The engine main body 1 includes combustion chambers 2 serving as cylinders, electronically controlled fuel injection valves 3 which inject a fuel into the respective combustion chambers 2, an intake manifold 4, and an exhaust manifold 5.

The intake manifold 4 is connected to an outlet of a compressor 7a of a super charger 7 through an intake air duct 6. An inlet of the compressor 7a is connected to an air cleaner 9 through an intake air amount detector 8. A throttle valve 10 which is driven by a stepping motor is arranged in the intake air duct 6. A cooling device 11 for cooling the intake air flowing in the intake air duct 6 is arranged in the intake air duct at an intermediate portion thereof. In the embodiment illustrated in FIG. 1, an engine coolant is introduced into the cooling device 11. The intake air is cooled by the engine coolant.

The exhaust purification apparatus in the present embodiment includes an oxidation catalyst 13 as a first oxidation catalyst, arranged in an exhaust passage of the engine. The oxidation catalyst 13 is located between the exhaust manifold 5 and the turbine 7b of the super charger 7. The oxidation catalyst 13 in the present embodiment is arranged adjacent to the exhaust manifold 5. The oxidation catalyst 13 is connected directly to exhaust manifold 5. The oxidation catalyst 13 in the present embodiment is arranged close to the engine main body 1. All of the exhaust gases discharged from the plural combustion chambers 2 pass in the oxidation catalyst 13.

The exhaust purification apparatus in the present embodiment includes a particulate filter (DPF: Diesel Particulate Filter) 16 to remove the particulate matter contained in the exhaust gas. The particulate filter 16 is arranged in the engine exhaust passage. The particulate filter 16 in the present embodiment is located on the downstream side of the super charger 7.

The exhaust purification apparatus according to the embodiment includes an oxidation catalyst 14, as a second oxidation catalyst. The oxidation catalyst 14 is located on the downstream side of the super charger 7. The oxidation catalyst 14 is connected to the outlet of the turbine 7b through an exhaust pipe 12. Also, the oxidation catalyst 14 is located on the upstream side of the particulate filter 16. The oxidation catalyst 14 in the present embodiment is arranged adjacent to the particulate filter 16.

In an automobile in the present embodiment, an engine room is arranged in the front portion of the automobile. The engine main body 1 is arranged in the engine compartment. The oxidation catalyst 13 is arranged in the engine compartment, whereas, the oxidation catalyst 14 and the particulate filter 16 are located below a floor panel.

An EGR (Exhaust Gas Recirculation) passage 18 is arranged between the exhaust manifold 15 and the intake manifold 14 to recirculate the exhaust gas. The EGR passage 18 has therein an electronic EGR control valve 19. Also, the EGR passage has a cooling device 20 to cool the EGR gas flowing in the EGR passage 18 at an intermediate portion thereof. In the embodiment illustrated in FIG. 1, the engine coolant is introduced into the cooling device 20. The EGR gas is cooled by the engine coolant.

The fuel injection valves 3 are connected to a common rail 22 through the respective fuel supply pipes 21. The common rail 22 is connected to a fuel tank 24 via an electronically controlled fuel pump 23 of which the amount of fuel to be discharged therefrom is variable. The fuel reserved in the fuel tank 24 is fed into the common rail 22 by means of the fuel pump 23. The fuel supplied to the common rail 22 is supplied to the fuel injection valves 3 through the respective fuel supply pipes 21.

The electronic control unit 30 comprises a digital computer. The electronic control unit 30 in the present embodiment functions as a controller for the exhaust purification apparatus. The electronic control unit 30 includes a ROM (read only memory) 32, a RAM (random access memory) 33, a CPU (micro processor) 34, an input port 35 and an output port 36. These components are interconnected by a bidirectional bus 31.

The ROM 32 is a read only memory in which information, such as a map necessary to carry out the control is stored in advance. The CPU 34 can execute any calculations or judgments. The RAM 33 is a readable-writable memory in which information, such as driving history, can be stored or calculation results can be temporarily stored.

A temperature sensor 26 is arranged on the downstream side of the particulate filter 16 to detect the temperature of the oxidation catalyst 14 or the particulate filter 16. The particulate filter 16 is provided with a differential pressure sensor 28 to detect a pressure difference between the portions of the exhaust passage located before and after the particulate filter 16. The output signals of the temperature sensor 26, the differential pressure sensor 28, and the intake air amount detector 8 are input to the input port 35 through corresponding A/D converters 37.

A load sensor 41 is connected to an accelerator pedal 40 and generates an output voltage in proportion to the amount by which the accelerator pedal 40 is depressed. The output voltage of the load sensor 41 is input to the input port 35 via a corresponding A/D converter 37. In addition, a crank angle sensor 42 is connected to the input port 35 and generates an output pulse each time the crank shaft rotates by, for example, 15°. The number of revolutions of the engine main body 1 can be detected based on the output of the crank angle sensor 42.

The output port 36 is connected to the fuel injection valves 3, the stepping motor for driving the throttle valve 10, the EGR control valve 19, and the fuel pump 23, through corresponding driving circuits 38.

The oxidation catalysts 13 and 14 have an oxidizing capability. The oxidation catalysts 13 and 14 are each provided with a substrate with separation walls extending, for example, in the flow direction of the exhaust gas. The substrate has, for example, a honey-comb structure. The substrate is, for example, accommodated in a cylindrical casing. The substrate is provided, on its surface, with a coating layer made of, for example, a porous oxidic powder, as a catalyst carrier. The coating layer carries thereon a precious metal catalyst, such as platinum (Pt), rhodium (Rh), palladium (Pd). The carbon monoxide (CO) or unburnt hydrocarbon (HC) contained in the exhaust gas is oxidized by the oxidation catalyst and converted into water or carbon dioxide, etc.

The oxidation catalyst has a specific activation temperature at which the oxidizing reaction is activated. Upon starting-up of an internal combustion engine, the temperatures of the engine main body, the super charger, and the components, such as the partition walls of the engine exhaust passage are low. The components of the engine exhaust passage absorb heat of the exhaust gas discharged from the combustion chambers. If the oxidation catalyst is located distantly from the engine main body, the temperature of the exhaust gas discharged from the engine main body is lowered before the exhaust gas reaches the oxidation catalyst. Consequently, it takes a long time until the temperature of the exhaust gas entering the oxidation catalyst rises. Namely, it takes a long time until the temperature of the oxidation catalyst becomes a specific activation temperature or more.

The first oxidation catalyst in this embodiment is arranged in the vicinity of the engine main body. The oxidation catalyst 13 in the embodiment is connected directly to the exhaust manifold. Therefore, the high temperature exhaust gas flows into the oxidation catalyst 13 even immediately after the starting-up of the engine main body 1. As a result, the oxidation catalyst 13 is heated quickly to the activation temperature or more. Thus, the oxidation catalyst 13 reaches the activation temperature within a short space of time after the engine starts up, so that the exhaust gas can be purified.

When an oxidization reaction occurs in the oxidation catalyst, heat is generated from the oxidization reaction. Due to the heat of the oxidization reaction, the temperature of the oxidation catalyst rises. The increased temperature of the oxidation catalyst contributes to an increase in the temperature of the exhaust gas. In this embodiment, the temperature of the particulate filter 16 is increased by the oxidization reaction of the oxidation catalyst 14. Note that the oxidization reaction of the oxidation catalyst 13 which is located adjacent to the exhaust manifold 5 is restricted.

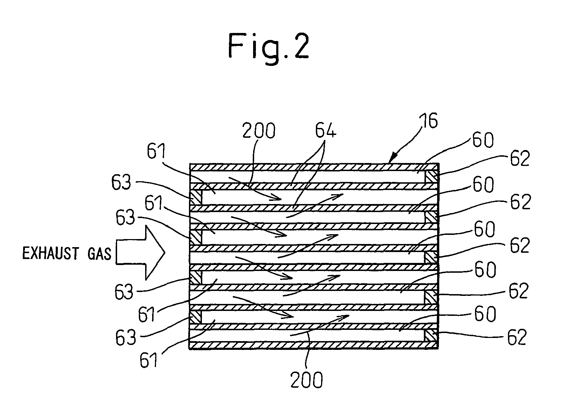

FIG. 2 shows a schematic sectional view of the particulate filter. In this embodiment, the particulate filter has a cylindrical shape. FIG. 2 is a sectional view of the particulate filter taken along the axis of the cylindrical shape. The particulate filter 16 is adapted to remove carbon particles and particulate matters, such as ionic particles, e.g., sulfate, contained in the exhaust gas.

The particulate filter in the embodiment has a honey-comb structure. The particulate filter 16 is made of, for example, a porous material such as cordierite. The particulate filter 16 has a plurality of passages 60, 61 extending along the flow direction of the exhaust gas. The passages 60 are closed by closures 62 at the ends on the downstream side. The passages 61 are closed by closures 63 at the ends on the upstream side.

The passages 60 and 61 are alternately arranged through thin separation walls 64. The exhaust gas entering the passages 60 is discharged into the adjacent passages 61 through the separation walls 64, as indicated by the arrows 200 in FIG. 2. When the exhaust gas passes the separation walls 64, the particulate matter is trapped. Thus, the particulate matter is collected by the particulate filter 16. The exhaust gas is discharged from the particulate filter 16 through the passages 61.

The particulate matter is gradually deposited in the particulate filter 16 during the operation of the internal combustion engine. With reference to FIG. 1, the amount of particulate matter deposited in the particulate filter is determined based on the pressure difference detected by the differential pressure sensor 28. It is judged that the amount of particulate matter deposited in the particulate filter exceeds the allowable value when the detected pressure difference exceeds an allowable value. When the amount of the deposited particulate matter exceeds the allowable value, the particulate filter is regenerated by removing the deposited particulate matters. In the illustrated embodiment, the amount of the deposited particulate matter is calculated based on the differential pressure between the portions of the exhaust passage located before and after the particulate filter, but the invention is not limited thereto and the amount of the deposited particulate matter can be detected by any other methods.

In the present invention, the ratio of the air and fuel (hydrocarbon) of the exhaust gas, supplied to the intake passage of the engine, the combustion chambers, or the exhaust passage of the engine is referred to as exhaust gas air-fuel ratio (A/F). In the regeneration of the particulate filter, the temperature of the particulate filter is increased to or above a value at which the particulate filter can be regenerated. In the present embodiment, the temperature of the particulate filter is increased to or above a target temperature. In this state, the deposited particulate matter is combusted by making the exhaust gas air-fuel ratio lean. As a result, the deposited particulate matter is removed.

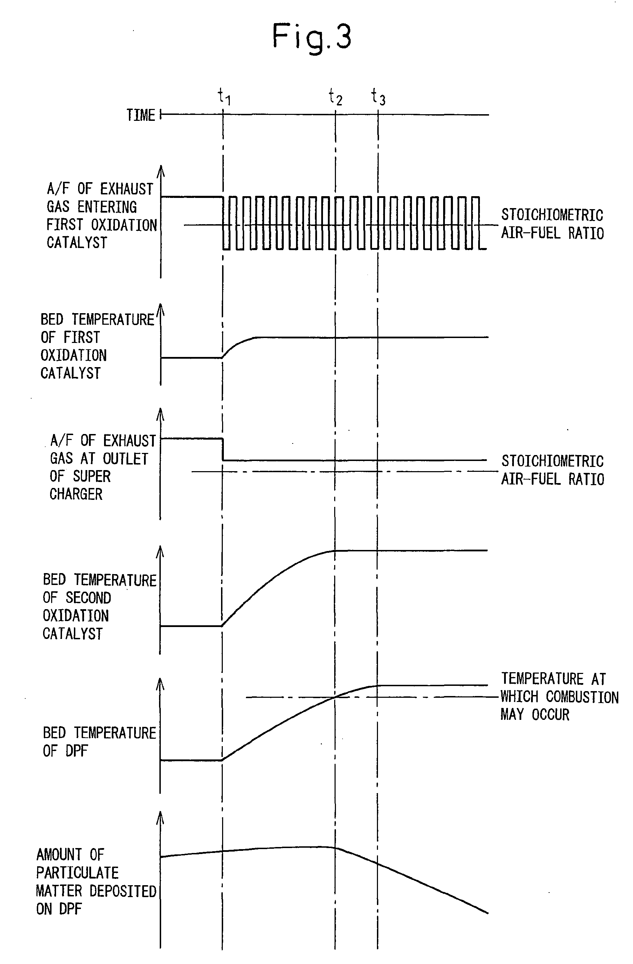

FIG. 3 illustrates a time chart when the particulate filter is regenerated in the embodiment. At time t₁, the amount of the particulate matter deposited in the particulate filter reaches the allowable value. To regenerate the particulate filter, the temperature rise of the particulate filter begins at time t₁. At time t₂, the bed temperature of the particulate filter reaches a value at which the particulate matter can be combusted. Furthermore, at time t₃, the bed temperature of the particulate filter reaches the target temperature. The target temperature in this embodiment is set to be equal to or more than a temperature at which the particulate matter can be combusted. The particulate matter is combusted and removed by making a lean air-fuel ratio of the exhaust gas entering the particulate filter. As a result, the amount of particulate matter deposited in the particulate filter is reduced. The removal of the particulate matters continues, for example, until a predetermined amount of particulate matter is combusted.

In the exhaust purification apparatus in the present embodiment, a repetitive control is carried out wherein the period in which the air fuel ratio of the exhaust gas entering the first oxidation catalyst is rich and the period in which the air fuel ratio of the exhaust gas entering the first oxidation catalyst is lean are alternately repeated when the temperature of the particulate filter is increased. Namely, the exhaust gas air-fuel ratio is intermittently made rich. Moreover, the repetitive control is carried out to maintain the particulate filter at the target temperature.

In this embodiment, the repetitive control in which the period for the rich air-fuel ratio of the exhaust gas discharged from the combustion chamber and the period for the lean air fuel ratio of the exhaust gas discharged from the combustion chamber are alternately repeated is carried out for all the combustion chambers. With reference to FIG. 1, the internal combustion engine of this embodiment has a plurality of combustion chambers 2. During the occurrence of two rotations of the crank shaft (corresponding to the period in which one combustion cycle occurs in all of the combustion chambers), a period in which the air-fuel ratio of the exhaust gas discharged from all of the combustion chambers is rich, is provided. Namely, the control is carried out in such a way that during two rotations of the crank shaft, when the air-fuel ratio of the exhaust gas discharged from a certain combustion chamber is rich, the air-fuel ratio of the exhaust gas discharged from the other combustion chambers is also rich. Furthermore, a period in which the air-fuel ratio of the exhaust gas discharged from all of the plural combustion chambers is lean is provided during two rotations of the crank shaft.

In this embodiment, the air-fuel ratio of the exhaust gas discharged from the engine main body is equal to the air-fuel ratio of the exhaust gas entering the first oxidation catalyst. In order for the exhaust gas discharged from the combustion chamber to have a rich air-fuel ratio, the amount of a fuel to be injected into the combustion chamber is increased. In this embodiment, an auxiliary injection is carried out after the main injection to thereby reduce the air-fuel ratio of the exhaust gas.

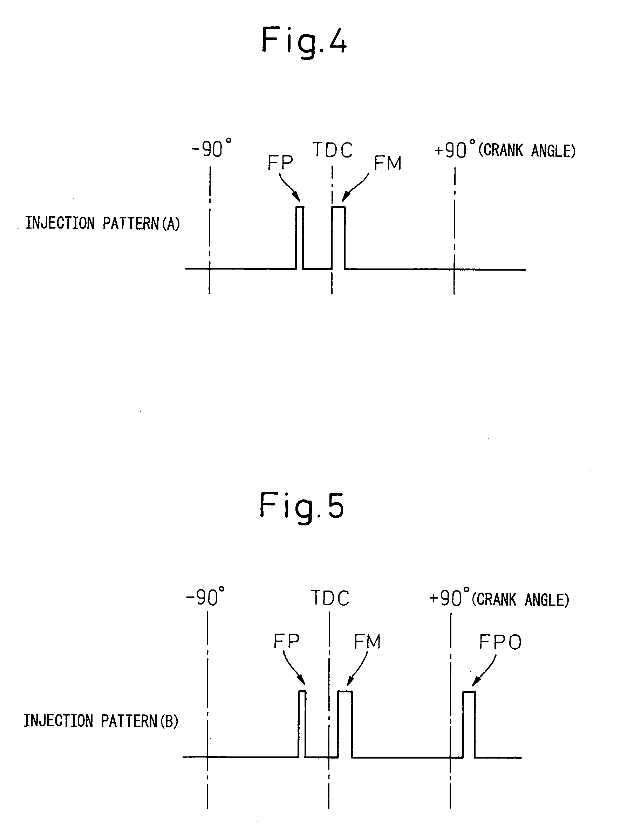

FIG. 4 shows a fuel injection pattern during a normal operation of an internal combustion engine, according to the present embodiment. The injection pattern "A" corresponds to a fuel injection pattern during a normal operation of the internal combustion engine. During the normal operation, the main injection FM occurs nearly at the TDC (Top Dead Center) of the compression stroke. The main injection FM occurs when the crank angle is approximately 0°. To stabilize the combustion at the main injection FM, a pilot injection FP is carried out before the main injection FM. The pilot injection FP occurs, for example, when the crank angle is approximately in the range of 10° to 40° before the TDC of the compression stroke. During the normal operation, the pilot injection FP is not always necessary. When the engine operates with the injection pattern "A" during the normal operation, the air-fuel ratio of the exhaust gas is lean.

FIG. 5 illustrates the injection pattern to make a rich air-fuel ratio of the exhaust gas discharged from the combustion chamber of the engine main body. With the injection pattern "B", a first auxiliary injection FPO is carried out after the main injection FM. The first auxiliary injection occurs when no fuel is combusted in the combustion chamber. The first auxiliary injection may be also referred to as a post injection. The first auxiliary injection does not contribute to the engine output. The first auxiliary injection occurs for example, when the crank angle is approximately in the range of 90° to 120° after the TDC of the compression stroke. The first auxiliary injection makes it possible to enrich the air-fuel ratio of the exhaust gas entering the exhaust passage of the engine.

Furthermore, the injection pattern "B" is retarded with respect to the TDC of the compression stroke. Namely, the injection timing of the main injection FM is retarded. Due to the retarded injection timing of the main injection FM, the injection timing of the pilot injection FP is also retarded. The retarded injection timing of the main injection FM makes it possible to increase the temperature of the exhaust gas. In the illustrated embodiment, the control is carried out to retard the main injection, but the invention is not limited thereto and the control to retard the main injection is not always necessary.

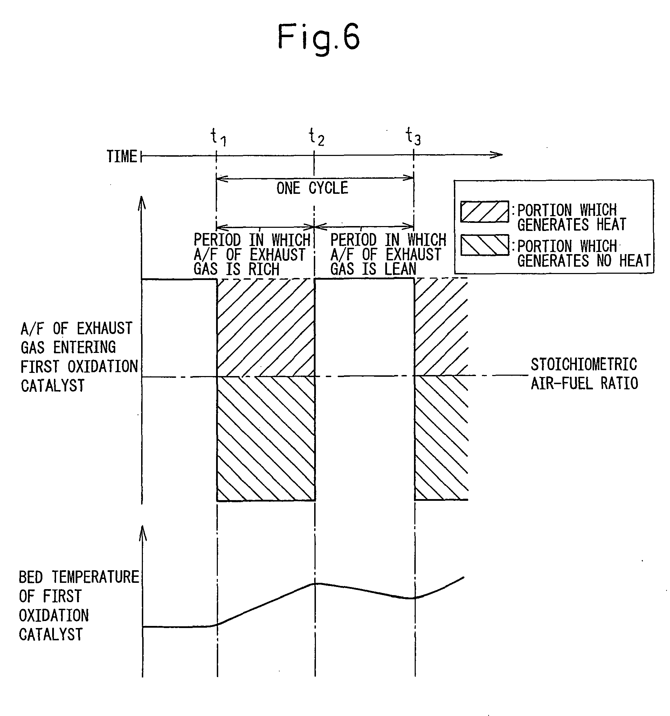

FIG. 6 shows an enlarged time chart when the repetitive control is carried out according to the present embodiment. FIG. 6 illustrates a relationship between the air-fuel ratio of the exhaust gas entering the first oxidation catalyst and the bed temperature of the first oxidation catalyst. In the operation in which the first auxiliary injection is not carried out, the air-fuel ratio of the exhaust gas entering the first oxidation catalyst is lean. In the operation in which the first auxiliary injection is carried out in the combustion chamber, the air-fuel ratio of the exhaust gas entering the first oxidation catalyst is rich. The period between time t₁ and time t₂ corresponds to the rich exhaust gas. The period between time t₂ and time t₃ corresponds to the lean exhaust gas. The period in which the exhaust gas entering the first oxidation catalyst is rich and the period in which the exhaust gas entering the first oxidation catalyst is lean define one cycle.

In a diesel engine according to the present embodiment, for example, the air-fuel ratio for combustion is approximately 50 to 20 during the normal operation including an idling state. In the present embodiment, to make a rich exhaust gas, the control is carried out so that the air-fuel ratio of the exhaust gas discharged from the engine main body is, for example, approximately below 10. Also, in the present embodiment, the control is carried out so that the air-fuel ratio of the exhaust gas discharged from a super charger is continuously lean.

In the period in which the air-fuel ratio of the exhaust gas entering the first oxidation catalyst is lean, a small amount of unburnt fuel which have not been combusted in the combustion chamber or carbon monoxide are oxidized in the first oxidation catalyst. A small amount of heat is generated in the first oxidation catalyst, as in the normal operation. In contrast therewith, in the period in which the air-fuel ratio of the exhaust gas is rich, the exhaust gas which contains a large amount of unburnt fuel enters the first oxidation catalyst. A part of the unburnt fuel corresponding to the stoichiometric air-fuel ratio is oxidized in the first oxidation catalyst. As a result, the first oxidation catalyst generates heat. However, the remaining amount of unburnt fuel exceeding the stoichiometric air-fuel ratio is not subjected to the oxidization because of a shortage of oxygen. Consequently, the remaining amount of unburnt fuel exceeding the stoichiometric air-fuel ratio passes through the first oxidation catalyst without contributing to the generation of heat.

As a result, in the period in which the air-fuel ratio of the exhaust gas is rich, the bed temperature of the first oxidation catalyst is slightly increased. However, in the subsequent period in which the air-fuel ratio of the exhaust gas is lean, the bed temperature of the first oxidation catalyst is lowered. It is possible to restrict a rise in the bed temperature of the first oxidation catalyst to a small value by performing the repetitive control with reference to FIG. 3. Thus, it is possible to prevent the first oxidation catalyst from greatly rising in the temperature.

The rich exhaust gas and the lean exhaust gas, discharged from the first oxidation catalyst are mixed in the mixer. The mixer in the present embodiment includes a super charger. With reference to FIG. 1, the two kinds of exhaust gases are mixed in the turbine 7b of the super charger 7.

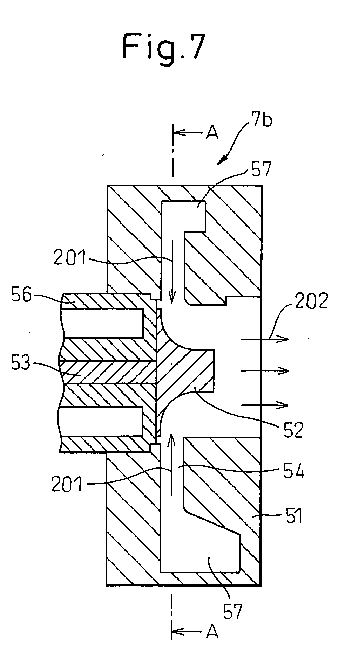

FIG. 7 schematically shows a sectional view of the turbine of the super charger in the present embodiment. The turbine 7b has a turbine housing 51. The turbine housing 51 defines therein an exhaust gas passage. The turbine 7b is provided with a turbine wheel 52 which is rotated by the exhaust gas blown thereto. The turbine wheel 52 is connected to a shaft 53 which is rotatably supported by a shaft housing 56. The shaft 53 is connected to a compressor wheel of the compressor 7a.

The exhaust gas flows toward the turbine wheel 52 as indicated by the arrows 201. When the exhaust gas collides with the turbine wheel 52, the turbine wheel 52 rotates. The rotational force produced by the turbine wheel 52 is transmitted to the compressor wheel arranged in the compressor 7a through the shaft 53. The rotation of the compressor wheel increases the pressure of the intake air. The exhaust gas which rotates the turbine wheel 52 is discharged from the outlet of the turbine 7b, as indicated by the arrows 202.

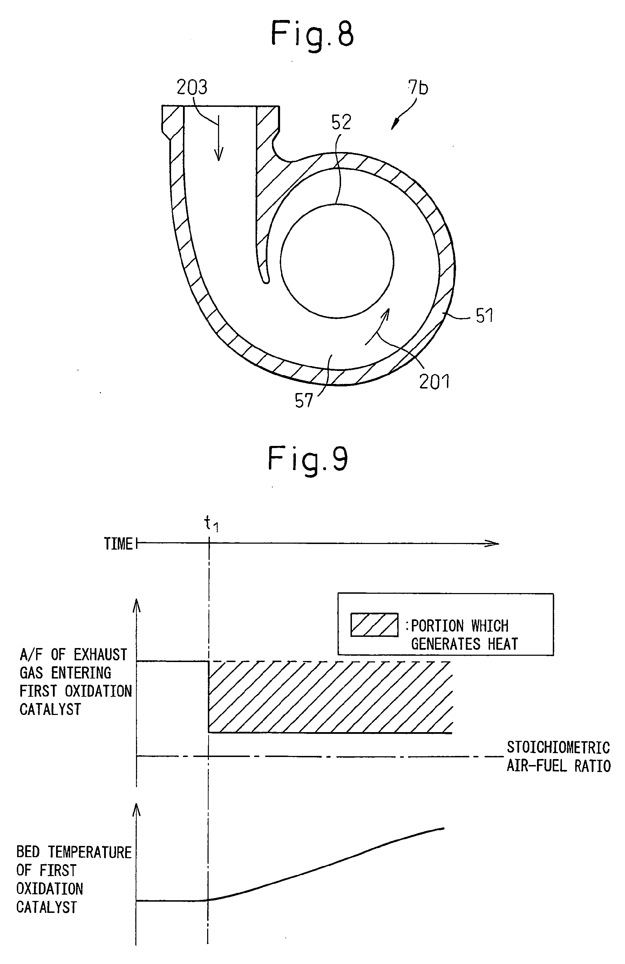

FIG. 8 schematically shows another sectional view of the turbine of the super charger in the present embodiment. FIG. 8 is a sectional view taken along the line A-A in FIG. 7. The turbine 7b has a scroll portion 57 which creates a flow of the exhaust gas. The exhaust gas enters through the scroll portion 57, as indicated by the arrow 203. With reference to FIGS. 7 and 8, the exhaust gas flows from the scroll portion 57 toward the turbine wheel 52, as indicated by the arrow 201. The scroll portion 57 is shaped corresponding to the outer profile of the turbine wheel 52. The scroll portion 57 is configured so that the sectional area of the passage thereof is gradually reduced along the flow of the exhaust gas.

In the present embodiment, the exhaust gas discharged from the first oxidation catalyst is temporarily reserved in the scroll portion 57. The rich and lean exhaust gases are mixed in the scroll portion 57. When the exhaust gases collide with the turbine wheel 52 and are discharged, the exhaust gases are more uniformly mixed. With reference to FIG. 3, the exhaust gas whose air-fuel ratio is substantially uniform regardless of the time at which the exhaust gas is to be discharged is discharged from the turbine 7b.

With reference to FIG. 1, the exhaust gas discharged from the turbine 7b of the super charger 7 enters the oxidation catalyst 14 as a second oxidation catalyst. With reference to FIG. 3, the air-fuel ratio of the exhaust gas at the outlet of the super charger, i.e., the air-fuel ratio of the exhaust gas entering the second oxidation catalyst is lean. The exhaust gas entering the second oxidation catalyst contains a larger amount of unburnt fuel than that during the normal operation, and therefore, the air-fuel ratio becomes smaller than that during the normal operation. The unburnt fuel which have not been subjected to oxidization in the first oxidation catalyst are continuously fed. Consequently, more oxidizations continuously occur in the second oxidation catalyst. As a result, the bed temperature of the second oxidation catalyst can be increased. The temperature of the exhaust gas is increased in the second oxidation catalyst. Consequently, it is possible to increase or maintain the temperature of the particulate filter 16 arranged on the downstream side of the oxidation catalyst 14 to or at a target value or a higher value. As can be understood from the foregoing, in the present embodiment, it is possible to restrict the oxidization in the first oxidation catalyst and to cause the oxidization in the second oxidation catalyst in order to increase the temperature of the particulate filter.

In this embodiment, the duration in which the air-fuel ratio of the exhaust gas discharged from the engine body is rich and the degree of the air-fuel ratio of the exhaust gas, and the duration in which the air-fuel ratio of the exhaust gas discharged from the engine body is lean and the degree of the air-fuel ratio of the exhaust gas are controlled, so that the air fuel-ratio of the exhaust gas discharged from the super charger is lean. The lean exhaust gas discharged from the super charger makes it possible to oxidize almost all of the unburnt fuel in the second oxidation catalyst. Furthermore, it is possible to suppress the outflow of the unburnt fuel from the second oxidation catalyst without being oxidized.

FIG. 9 shows an enlarged time chart when the control of a comparative example in this embodiment is carried out. In the control of the comparative example, a large amount of unburnt fuel is oxidized in the first oxidation catalyst arranged on the upstream side of the super charger in order to increase the temperature of the particulate filter. More oxidizations occur in the first oxidation catalyst. Namely, the temperature of the exhaust gas is increased by the first oxidation catalyst. In this arrangement, the second oxidation catalyst can be dispensed with.

At time t₁, the temperature of the particulate filter begins rising. The first auxiliary injection occurs in the combustion chamber. The first auxiliary injection is carried out, so that the air-fuel ratio of the exhaust gas entering the first oxidation catalyst is greater than the stoichiometric air-fuel ratio. The low air-fuel ratio of the exhaust gas entering the first oxidation catalyst is maintained. In the first oxidation catalyst, the continuous oxidization occurs. As a result, the bed temperature of the first oxidation catalyst continues increasing. The increase in the temperature of the first oxidation catalyst continues until the bed temperature of the particulate filter reaches a target temperature.

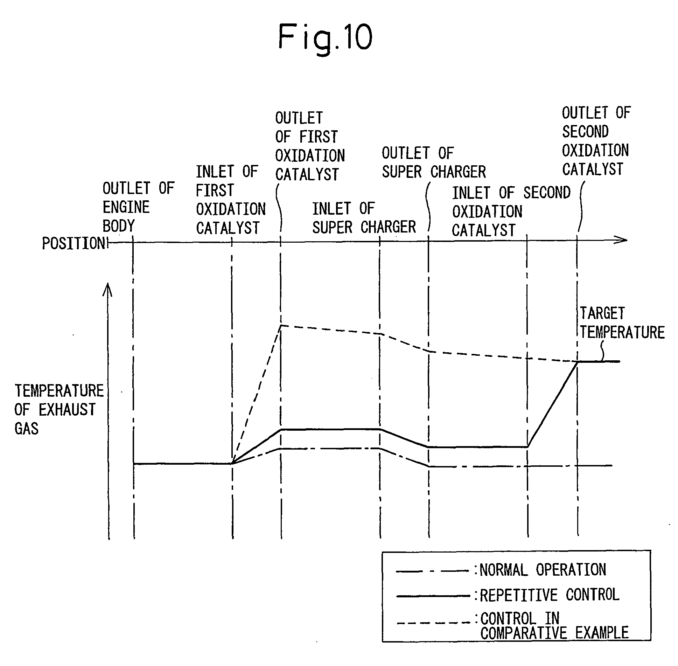

FIG. 10 shows a graph illustrating the temperatures of the exhaust gas in the engine exhaust passage when the repetitive control according to the present embodiment and the control in the comparative example are carried out. During the normal operation, unburnt fuel, etc. discharged from the engine body are oxidized in the first oxidation catalyst to thereby generate a small quantity of heat. The exhaust gas which has passed through the first oxidation catalyst enters the super charger. In the super charger, the exhaust gas rotates the turbine, so that the temperature of the exhaust gas is decreased.

If the repetitive control is carried out when the temperature of the particulate filter is increased, the exhaust gas slightly rises in temperature in the first oxidation catalyst. Due to the oxidization which occurs during the period in which the air-fuel ratio of the exhaust gas is rich, the temperature at the outlet of the first oxidation catalyst is slightly increased compared with the normal operation. In the super charger, the exhaust gas rotates the turbine and accordingly the temperature thereof is reduced. Due to the oxidization in the second oxidation catalyst, the exhaust gas remarkably rises in temperature and reaches to a target temperature.

In contrast therewith, in the control of the comparative example, as shown in FIG. 9, the air-fuel ratio of the exhaust gas entering the first oxidation catalyst is maintained at a value slightly higher than the stoichiometric air-fuel ratio. Consequently, more oxidizations occur in the first oxidation catalyst. The temperature of the exhaust gas at the outlet of the first oxidation catalyst becomes high. In the example shown in FIG. 10, as almost all of the unburnt fuel fed to the first oxidation catalyst is consumed, the oxidization hardly occurs in the second oxidation catalyst.

In the engine exhaust passage, the temperature of the exhaust gas is lowered in the super charger. Moreover, as the heat is absorbed by the components of the exhaust passage and is radiated into the air, the temperature further decreases. Consequently, when the temperature of the exhaust gas is to be increased in the first oxidation catalyst, it is necessary to increase the temperature of the exhaust gas to a value higher than the target temperature to regenerate the particulate filter.

As may be understood from the above, the temperature of the exhaust gas at the outlet of the first oxidation catalyst must be higher than the target value to regenerate the particulate filter. Namely, the temperature of the first oxidation catalyst in the control of the comparative example must be higher than the temperature of the second oxidation catalyst when the repetitive control is carried out. In the control of the comparative example, the maximum temperature of the first oxidation catalyst is high and accordingly, the thermal deterioration of the first oxidation catalyst is increased.

In particular, when the load of the engine body is high, a drop in temperature in the super charger reaches approximately 100 °C. As a result, the temperature of the exhaust gas is largely reduced, or if the load of the engine body is low and the engine runs at a small number of revolutions, the flow rate of the exhaust gas is reduced. When it takes a long time until the exhaust gas discharged from the first oxidation catalyst reaches the particulate filter, the quantity of heat to be radiated is increased. Consequently, the amount of the reduction of the temperature of the exhaust gas is increased. Furthermore, when the first oxidation catalyst is arranged in the engine room and the particulate filter is arranged below the floor panel, as in the present embodiment, the length of the exhaust pipe is increased, so that the quantity of heat to be radiated is increased. In this case, the amount of the reduction in the temperature of the exhaust gas becomes also large. In the first oxidation catalyst, it is necessary to increase the temperature to a value high enough to compensate for the temperature drop. It is necessary to increase the temperature of the exhaust gas at the outlet of the first oxidation catalyst. In this case, the thermal deterioration of the first oxidation catalyst is enhanced.

The thermal deterioration includes a phenomenon in which the specific surface area of a carrier which carries a catalyst metal is reduced and a sintering in which the catalyst metal agglomerates. The phenomenon in which the specific surface area of the carrier is reduced occurs when the temperature of the oxidation catalyst is increased, thus leading to the reduction in the surface area of the carrier which carries the catalyst metal. For example, when the carrier of the catalyst metal is made of a catalyst coat layer coated on a cordierite, the fine structure of the surface of the catalyst coat layer is disintegrated, thus resulting in the reduction of the surface area. Upon disintegration, the catalyst metal provided on the surface of the catalyst coat layer is incorporated into the catalyst coat layer. Consequently, the surface area of the catalyst metal is reduced, leading to a poor purification efficiency. Moreover, when the temperature of the oxidation catalyst is high and the atmosphere around the oxidation catalyst contains an excess amount of air, the sintering may occur. The sintering refers to a phenomenon in which particles of the catalyst metal, such as platinum, agglomerate to increase the diameter, so that the sum of the surface areas of the particles of the catalyst metal is reduced, thus leading to the reduction in the purifying ability.

The thermal deterioration is acceleratedly enhanced in accordance with the temperature rise. It is possible to remarkably restrict the thermal deterioration of the oxidation catalyst by reducing the reachable maximum temperature of the oxidation catalyst, as in the present embodiment.

In the control of the comparative example, as the temperature of the exhaust gas at the outlet of the first oxidation catalyst is high, there is a large temperature difference between the exhaust gas and the atmosphere. The quantity of heat to be radiated to the atmosphere from the exhaust passage between the outlet of the first oxidation catalyst and the particulate filter is increased. Alternatively, the quantity of heat to be absorbed by the components arranged in the exhaust passage is increased. In contrast therewith, it is possible to reduce the temperature of the exhaust gas in the exhaust passage between the outlet of the first oxidation catalyst and the inlet of the second oxidation catalyst by carrying out the repetitive control in order to reduce the quantity of heat to be radiated to the atmosphere and to be absorbed by the components arranged in the exhaust passage. Namely, the repetitive control makes it possible to reduce the heat loss.

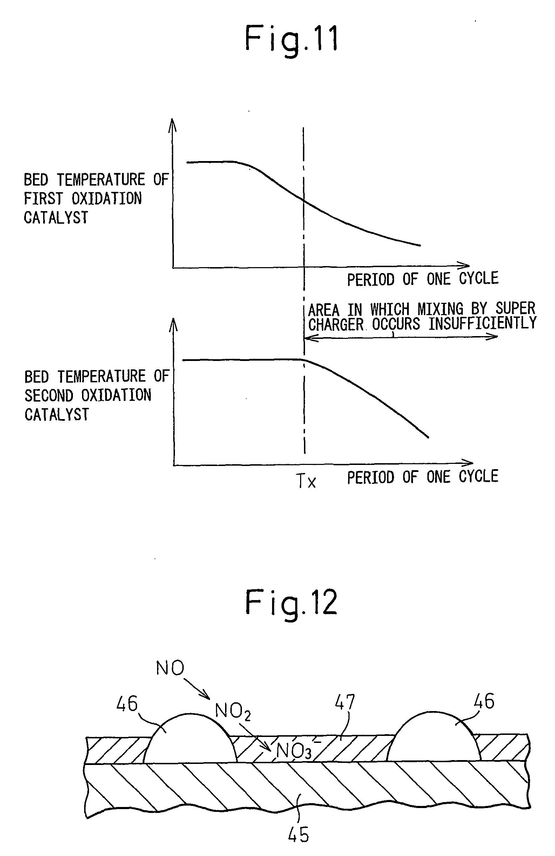

FIG. 11 illustrates a graph showing a relationship between the cycle of the repetitive control according to the embodiment and the bed temperatures of the first and second oxidation catalysts. The abscissa represents the length of one cycle corresponding to a sum of a period in which the air-fuel ratio of the exhaust gas is rich and a period in which the air-fuel ratio of the exhaust gas is lean, and the ordinates represents the bed temperatures of the first and second oxidation catalysts.

In the first oxidation catalyst, it is possible to effectively restrain the rich exhaust gas and the lean exhaust gas from being mixed before they reach the first oxidation catalyst by elongating the one cycle of the repetitive control. It is possible to restrict the oxidization in the first oxidation catalyst.

If one cycle of the repetitive control is prolonged, rich exhaust gas and lean exhaust gas are not mixed sufficiently, and then no sufficient oxidization may occur in the second oxidation catalyst. Namely, if the mixing in the super charger is insufficient, the rich exhaust gas flows into the second oxidation catalyst. There may be an air shortage also in the second oxidation catalyst. In the example shown in FIG. 11, when one cycle is above time Tx, the mixing in the super charger becomes insufficient. In this case, the unburnt fuel, etc., passes through the second oxidation catalyst without being oxidized. It is preferable that one cycle be shorter than Tx. When the repetitive control is performed, it is preferable that the rich and lean exhaust gases be sufficiently mixed in the super charger, and that the air-fuel ratio of the exhaust gas entering the second oxidation catalyst is continuously lean.

Also, it is preferable that the air-fuel ratio of the exhaust gas discharged from the engine body is controlled so that the rich and lean exhaust gases are sufficiently mixed in the super charger, and that the air-fuel ratio of the exhaust gas entering the second oxidation catalyst is continuously lean.

As mentioned above, it is preferable that the heat generation in the first oxidation catalyst be restricted and almost all of the unburnt fuel be oxidized in the second oxidation catalyst, by the repetitive control.

Note that the capability of mixing the lean exhaust gas and the rich exhaust gas depends on the performance of the mixer. For instance, when the mixer includes the super charger, the performance of the mixer depends on the volume of the scroll portion of the super charger. As the scroll portion becomes large, the mixing capability is enhanced. Therefore, as the size of the scroll portion is increased, a sufficient mixing can be achieved even if one cycle is prolonged.

In the present embodiment, although the duration in which the air-fuel ratio of the exhaust gas entering the first oxidation catalyst is rich is substantially identical to the duration in which the air-fuel ratio of the exhaust gas entering the first oxidation catalyst is lean, the invention is not limited thereto, and the duration in which the air-fuel ratio of the exhaust gas entering the first oxidation catalyst is rich may be different from the duration in which the air-fuel ratio of the exhaust gas entering the first oxidation catalyst is lean. Also, in the present embodiment, although the duration in which the air-fuel ratio of the exhaust gas entering the first oxidation catalyst is rich and air-fuel ratio of the exhaust gas are substantially constant, but the invention is not limited thereto and the duration in which the air-fuel ratio of the exhaust gas entering the first oxidation catalyst is rich or the air-fuel ratio of the exhaust gas may vary during the repetitive control. For example, it is possible to vary the number of combustion cycles for continuously performing the first auxiliary injection during the repetitive control. Alternatively, it is possible to vary the amount of fuel to be injected into the combustion chamber through the auxiliary injection during the repetitive control.

Although the repetitive control is carried out so that the air-fuel ratio of the exhaust gas discharged from the super charger is lean, in the illustrated embodiment, the invention is not limited thereto and the repetitive control may be carried out so that the air-fuel ratio of the exhaust gas entering the second oxidation catalyst is identical to the stoichiometric air-fuel ratio or is rich.

Although the exhaust treatment device whose temperature is to be increased is applied to the particulate filter by way of example in the present embodiment, the invention is not limited thereto and can be applied to any exhaust purification apparatus including the exhaust treatment device, whose temperature is to be increased. For example, the exhaust treatment device whose temperature is to rise may include a NOx storage and reduction catalyst.

FIG. 12 schematically shows an enlarged sectional view of a NOx storage and reduction catalyst. The NOx storage and reduction catalyst 17 temporarily holds NOx contained in the exhaust gas discharged from the engine body 1 by means of at least one of storage and adsorption, and converts the NOx into N₂ when the NOx is emitted from the catalyst.

The NOx storage and reduction catalyst 17 has a substrate which carries thereon, a catalyst carrier 45 made of, for example, alumina. A precious metal catalyst 46 is dispersedly carried on the surface of the catalyst carrier 45. A layer of NOx absorbent 47 is formed on the surface of the catalyst carrier 45. For example, a platinum Pt is used for the precious metal catalyst. The NOx absorbent can comprise at least one selected from alkali metals, such as potassium K, sodium Na, or cesium Cs, alkaline earth metals, such as barium Ba or calcium Ca, and rare earth metals, such as lanthanum La or yttrium Y.

When the air-fuel ratio of the exhaust gas is lean (larger than the stoichiometric air-fuel ratio), the NOx contained in the exhaust gas is oxidized to NO₂ by the precious metal catalyst 46. The NO₂ is stored in the form of a nitrate ion NO₃⁻ in the NOx absorbent 47. When the air-fuel ratio of the exhaust gas is rich or identical to the stoichiometric air-fuel ratio, a nitrate ion NO₃⁻ stored in the NOx absorbent 47 is emitted in the form of NO₂ from the NOx absorbent 47. The emitted NOx is reduced to N₂ by unburnt hydrocarbon or carbon monoxide, etc. contained in the exhaust gas.

In the embodiments mentioned above, the storage of NOx has been discussed, but the invention is not limited thereto, and any NOx storage and reduction catalyst which stores any form of NOx can be used. For example, it is possible to adsorb NOx to the catalyst carrier, etc.

It should be appreciated that the exhaust gas contains SOx, i.e., SO₂. When SO₂ passes through the NOx storage and reduction catalyst 17, it is oxidized to SO₃ by the precious metal catalyst 46. The SO₃ is absorbed by NOx absorbent 47 to produce, for example, sulfate salt (e.g., BaSO₄). BaSO₄ is stable and tends to not decompose. Therefore, if the air-fuel ratio of the exhaust gas is merely made rich, BaSO₄ remains as it is without being dissolved. Also, SOx may be adsorbed on the catalyst carrier, etc. Consequently, the amount of NOx that the NOx storage and reduction catalyst can absorb is reduced. The NOx storage and reduction catalyst holds SOx by storage or adsorption, thus leading to so-called sulfur-poisoning.

To recover the sulfur-poisoning, the temperature of the NOx storage and reduction catalyst is increased to a value high enough to emit SOx. In this state, the SOx emission control is carried out so that the air-fuel ratio of the exhaust gas entering the NOx storage and reduction catalyst is rich or identical to the stoichiometric air-fuel ratio. The SOx emission control makes it possible to emit the SOx from the NOx storage and reduction catalyst.

As can be understood from the foregoing, when the SOx emission control is carried out, it is necessary to increase the temperature of the NOx storage and reduction catalyst. The present invention can be applied when the NOx storage and reduction catalyst is arranged in the exhaust purification apparatus, as the exhaust treatment device whose temperature is to be increased.

In the exhaust purification apparatus for an internal combustion engine according to the present embodiment, the air-fuel ratio of the exhaust gas discharged from the combustion chamber is made rich by the first auxiliary injection FPO which occurs in the combustion chamber, but the invention is not limited thereto and it is possible to adopt any structures for making the air-fuel ratio of the exhaust gas rich.

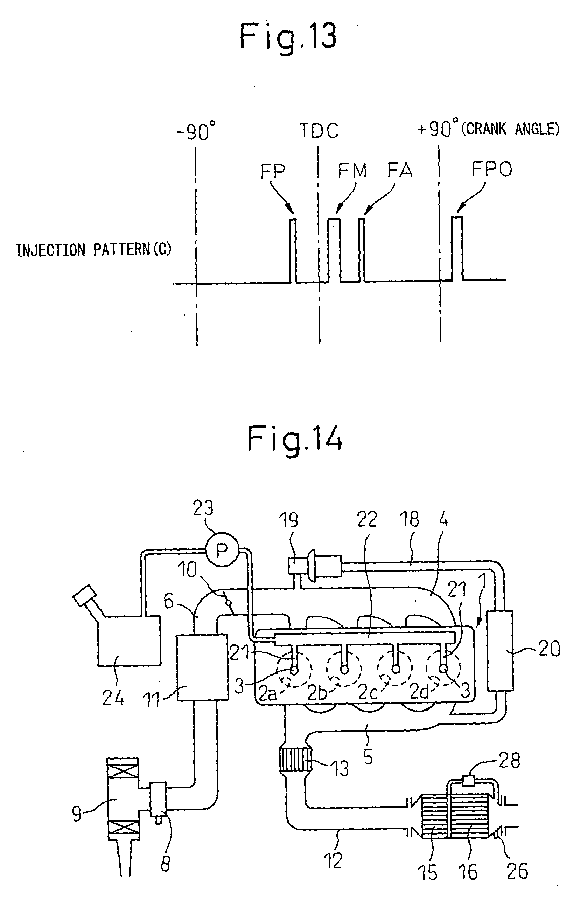

FIG. 13 illustrates an injection pattern by which the air-fuel ratio of the exhaust gas is made rich. According to the injection pattern "C", a second auxiliary injection FA is carried out in addition to the first auxiliary injection FPO. The second auxiliary injection FA occurs at a time in which the combustion can takes place after the main injection. The second auxiliary injection is referred to as an after injection FA. The second auxiliary injection FA occurs, for example, in the range of the crank angle of approximately 40° after the TDC of the compression stroke. The second auxiliary injection FA prolongs the after burning period to thereby increase the temperature of the exhaust gas. Also, the amount of unburnt fuel discharged from the combustion chamber can be increased. In particular, the light unburnt fuel can be discharged by burning a part of the fuel injected by the second auxiliary injection. As may be seen from the foregoing, it is possible to perform the second auxiliary injection FA in addition to the first auxiliary injection FPO. It should be appreciated that the second auxiliary injection FA may affect the engine output. Therefore, it is preferable that the second auxiliary injection be carried out to the extent that no impact, etc. occurs due to the fluctuation of the engine output torque.

The mixer in the illustrated embodiment includes the turbine of the super charger, but the invention is not limited thereto and any devices which can mix the lean exhaust gas and the rich exhaust gas, which are alternately discharged can be used.

In the present embodiment, the particulate filter is arranged on the downstream side of the second oxidation catalyst as the exhaust treatment device whose temperature is to be increased, but the present invention is not limited thereto and the second oxidation catalyst may have functions other than the oxidization. For example, a particulate filter which carries an oxidizing catalyst metal may be arranged in the exhaust passage of the engine as a second oxidation catalyst.

The first oxidation catalyst may have functions other than oxidization. Also, other exhaust treatment device may be arranged between the first oxidation catalyst and the turbine of the super charger. For instance, a selective reduction catalyst in which an ammonia is used as a reducing agent may be arranged between the first oxidation catalyst and the turbine of the super charger.

The selective reduction catalyst selectively reduces NOx by feeding a reducing agent. When an ammonia is used as a reducing agent, urea, etc., is fed into the engine exhaust passage on the upstream side of the selective reduction catalyst. The selective reduction catalyst may include a catalyst having a zeolite carrier which carries copper thereon. However, the zeolite may be deteriorated due to dealumination when the zeolite is heated to a high temperature in the presence of vapor. If such an exhaust treatment device which may be deteriorated at a high temperature is arranged on the downstream side of the first oxidation catalyst, the repetitive control makes it possible to suppress the deterioration of the exhaust treatment device at a high temperature.

Although the first oxidation catalyst is arranged close to the engine body in the illustrated embodiment, the invention is not limited thereto and first oxidation catalyst can be arranged in any place between the engine body and the mixer. Furthermore, all the exhaust gases discharged from the plural combustion chambers enter the single first oxidation catalyst in the embodiment, but the invention is not limited thereto, and only a part of the exhaust gases discharged from the plural combustion chambers may be introduced into the first oxidation catalyst. Alternatively, it is also possible arrange a plurality of first oxidation catalysts in the engine exhaust passage.

Although the repetitive control is carried out so that the period in which the air-fuel ratio of the exhaust gases discharged from all the combustion chambers of the engine body is rich and the period in which the air-fuel ratio of the exhaust gases discharged from all the combustion chambers of the engine body is lean are alternately repeated, in the illustrated embodiment, the present invention is not limited thereto, and the repetitive control can be carried out so that the period in which the air-fuel ratio of the exhaust gases discharged from the engine body is rich and the period in which the air-fuel ratio of the exhaust gases discharged from the engine body is lean are alternately repeated. The engine body may have a plurality of combustion chambers wherein the air-fuel ratios of the exhaust gases discharged from the respective combustion chambers can be individually controlled to be rich or lean, so that the period in which the air-fuel ratio of the exhaust gas discharged from the engine body is rich and the period in which the air-fuel ratio of the exhaust gas discharged from the engine body is lean are alternately repeated.

For example, when the engine body has four cylinders which define the combustion chambers wherein the first cylinder, the third cylinder, the fourth cylinder, and the second cylinder perform the expansion stroke in this order, the control may be carried out in such a way that air-fuel ratio of the exhaust gases discharged from the first, third, and fourth cylinders in this order is rich, and thereafter, the air-fuel ratio of the exhaust gases discharged from the second, first, and third cylinders in this order is lean.

In the illustrated embodiment, the above discussion has been directed to the control in which the oxidization of the first oxidation catalyst is restricted when the temperature of the second oxidation catalyst is increased, but the present invention is not limited thereto. It is possible to share the quantity of heat to be generated to the first and second oxidation catalysts. For example, the rise in the temperature of the exhaust gas may be carried out by approximately half by the first oxidation catalyst and the remaining half of the temperature rise may be carried out by the second oxidation catalyst. In this case, it is also possible to lower the reachable maximum temperature of the first oxidation catalyst to thereby restrict the thermal deterioration.

### Embodiment 2

FIGS. 14 to 16 show an exhaust purification apparatus for an internal combustion engine, according to Embodiment 2 of the present invention.
FIG. 14 schematically shows an internal combustion engine according to this embodiment. The oxidation catalyst 15 as a second oxidation catalyst in this embodiment has an oxygen storing capability. The oxidation catalyst 15 in this embodiment includes ceria (cerium oxide) as a co-catalyst. Also, in this embodiment, the internal combustion engine has no super charger. In the engine exhaust passage, the air passing through the air cleaner 9 flows in the intake manifold 4 through the intake duct 6. In the exhaust passage, the exhaust gas discharged from the oxidation catalyst 13 as a first oxidation catalyst is introduced into the oxidation catalyst 15 through the exhaust pipe 12.

The internal combustion engine according to Embodiment 2 has a plurality of combustion chambers. In this embodiment, the engine has four combustion chambers 2a to 2d. The combustion chambers 2a, 2b, 2c and 2d correspond to first, second, third, and fourth cylinders, respectively.

In Embodiment 2, when the temperature of the particulate filter 16 is to be increased, the iterative control is carried out so that the period in which the air-fuel ratio of the exhaust gas discharged from the engine body is rich and the period in which the air-fuel ratio of the exhaust gas discharged from the engine body is lean are alternately repeated. As in the repetitive control in Embodiment 1, the iterative control is carried out so that a part of the unburnt fuel contained in the rich exhaust gas passes through the oxidation catalyst 13. The iterative control restricts the temperature rise in the oxidation catalyst 13.

In the first iterative control according to Embodiment 2, the air-fuel ratios of the exhaust gases discharged from the combustion chambers are controlled to be rich or lean in all the combustion chambers. Namely, during two rotations of the crank shaft, when the air-fuel ratio of the exhaust gas discharged from the first cylinder is rich, the air-fuel ratios of the exhaust gases discharged from the second to fourth cylinders are controlled to be rich.

The oxidation catalyst 15 stores the oxygen when the lean exhaust gas enters therein. When the rich exhaust gas enters thereafter, the oxidization can be promoted due to the stored oxygen. The amount of oxygen which is insufficient to oxidize can be compensated by the stored oxygen. Thus, the iterative control makes it possible to cause the second oxidation catalyst 15 to perform more oxidization to thereby increase the temperature of the exhaust gas.

In the exhaust purification apparatus for an internal combustion engine according to Embodiment 2, it is possible to promote the oxidization in the second oxidation catalyst while restricting the oxidization in the first oxidation catalyst in order to increase the temperature of the exhaust gas. As a result, it is possible to lower the temperature of the oxidation catalyst which may be attained to thereby restrict the thermal deterioration of the oxidation catalyst.

When the iterative control is carried out, it is preferable that the duration in which the air-fuel ratio of the exhaust gas discharged from the engine body is rich and the degree of the air-fuel ratio of the exhaust gas as well as the duration in which the air-fuel ratio of the exhaust gas discharged from the engine body is lean and the degree of the air-fuel ratio of the exhaust gas be controlled, so that if the air-fuel ratio of the exhaust gas in the second oxidation catalyst is lean, the oxygen is stored and if the air-fuel ratio of the exhaust gas is rich, almost all of the unburnt fuel flowing therein are oxidized with the stored oxygen. This control makes it possible to suppress the passage of the unburnt fuel through the second oxidation catalyst without being oxidized and emission of the unburnt fuel into the atmosphere.

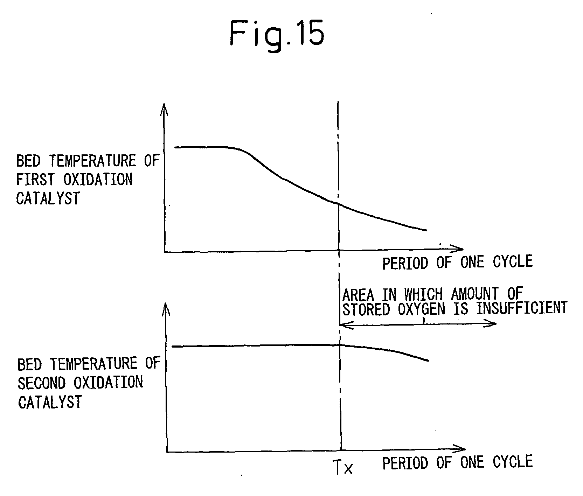

FIG. 15 illustrates a graph showing a relationship between the length of one cycle and the bed temperatures of the first and second oxidation catalysts in the iterative control of the present embodiment. As in Embodiment 1, one cycle corresponds to a sum of the period in which the air-fuel ratio of the exhaust gas is rich and the period in which the air-fuel ratio of the exhaust gas is lean. By prolonging the period of one cycle, it is possible to restrict the oxidization in the first oxidation catalyst to thereby lower the bed temperature of the first oxidation catalyst, as in Embodiment 1.

If the period of one cycle of the iterative control is short, the oxygen can be stored in the second oxidation catalyst while the air-fuel ratio of the exhaust gas is lean, whereby the oxidization can be carried out with the stored oxygen. Thus, almost all of the unburnt fuel entering the second oxidation catalyst can be oxidized.

In contrast therewith, when the one cycle time of the iterative control is prolonged, the period in which the air-fuel ratio of the exhaust gas is lean is long, so that the second oxidation catalyst is saturated with the stored oxygen. If the period in which the air-fuel ratio of the exhaust gas is rich is prolonged, the amount of unburnt fuel continuously flowing into the second oxidation catalyst is increased. Consequently, the amount of stored oxygen may be deficient. As a result, the oxidization of the unburnt fuel may be insufficient, whereby the second oxidation catalyst has an area in which the bed temperature thereof is decreased.

To this end, the period of one cycle of the iterative control is preferably set to be short enough not to be deficient in the amount of oxygen to be stored. In the example shown in FIG. 15, it is preferable that the period of one cycle is less than Tx. Thus, it is possible for the second oxidation catalyst to oxidize almost all of the unburnt fuel with the stored oxygen when the rich exhaust gas enters.

Also, it is preferable that the air-fuel ratio of the exhaust gas discharged from the engine body is controlled in such a way that when the rich exhaust gas enters the second oxidation catalyst, almost all of the unburnt fuel can be oxidized with the stored oxygen.

As may be understood from the foregoing, it is preferable that the heat generation in the first oxidation catalyst be restricted and almost all of the unburnt fuel be oxidized in the second oxidation catalyst under the iterative control.

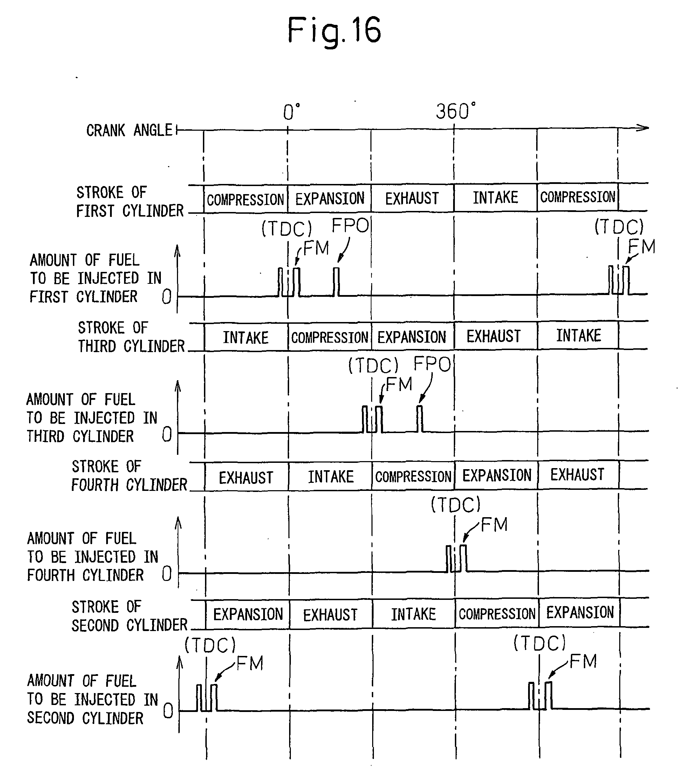

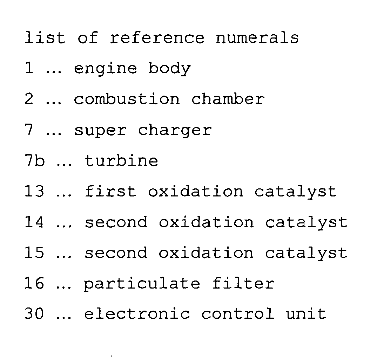

FIG. 16 illustrates the second iterative control according to Embodiment 2. In the second iterative control, the air-fuel ratio of the exhaust gas discharged from the respective combustion chambers is controlled to be rich or lean during one rotation of the crank shaft. In the internal combustion engine according to Embodiment 2, the combustion stroke occurs in the first, third, fourth, and second cylinders, in this order.

In the example shown in FIG. 16, when the first auxiliary injection FPO occurs in the first and third cylinders, the air-fuel ratio of the exhaust gas discharged from the combustion chambers is made rich. The period in which the air-fuel ratio of the exhaust gas discharged from the engine body is rich is defined. The first auxiliary injection FPO does not take place in the subsequent fourth and second cylinders, so that the air-fuel ratio of the exhaust gas discharged from the combustion chambers is lean. The period in which the air-fuel ratio of the exhaust gas discharged from the engine body is lean is defined. When the combustion stroke in the second cylinder ends, the combustion stroke takes place again in the first cylinder, so that the air-fuel ratio of the exhaust gas is made rich. Thus, the period in which the air-fuel ratio of the exhaust gas discharged from the engine body is rich and the period in which the air-fuel ratio of the exhaust gas is lean are repeated.

In the second iterative control according to Embodiment 2, the plurality of combustion chambers are divided into two groups, and the period in which the air-fuel ratio of the exhaust gas is rich and the period in which the air-fuel ratio of the exhaust gas is lean are repeated. In the iterative control, it is possible to vary the injection pattern for each combustion chamber in order to define the period in which the air-fuel ratio of the exhaust gas discharged from the engine body is rich and the period in which the air-fuel ratio of the exhaust gas is lean.

In particular, in the second iterative control according to Embodiment 2, the plural cylinders are equally divided into two groups, but the invention is not limited thereto and it is possible to perform the control for each cylinder. For example, the control may be carried out so that, in the first, third, and fourth cylinders, the air-fuel ratio of the exhaust gas discharged from the combustion chambers in this order is made rich, and, after that, in the second, first, and third cylinders, the air-fuel ratio of the exhaust gas discharged from the combustion chambers in this order is made lean.

The exhaust purification apparatus according to Embodiment 2 includes the particulate filter as the exhaust treatment device whose temperature is to be increased, but the invention is not limited thereto, and a NOx storage and reduction catalyst can be included as the exhaust treatment device whose temperature is to be increased.

Although the second oxidation catalyst in Embodiment 2 includes ceria as a co-catalyst, the invention is not limited thereto. Any second oxidation catalysts which are capable of storing oxygen can be used. For example, the second oxidation catalyst may contain an oxygen storing component, such as zirconia. Also, the second oxidation catalyst according to Embodiment 2 may be an exhaust treatment device having a function other than the oxidization.

The other structures, modes of operation and effects of Embodiment 2 are the same as those of Embodiment 1 and, accordingly, no duplicate explanation therefore will be given herein.

The above mentioned Embodiments 1 and 2 can be appropriately combined. For example, in Embodiment 2, it is possible to arrange the super charger as in Embodiment 1. In the drawings, the identical or corresponding elements are designated with like reference numerals. Note that the embodiments discussed above are non-limitative and do not limit the scope of the invention. The embodiments can be modified within the scope of the invention included in the claims.

## Claims

1. An exhaust purification apparatus for an internal combustion engine, comprising:
a first oxidation catalyst arranged in an exhaust passage of an engine;
a mixer arranged in the exhaust passage on the downstream side of the first oxidation catalyst; and
a second oxidation catalyst arranged in the exhaust passage on the downstream side of the mixer;
wherein a repetitive control is carried out in such a way that a period in which an air-fuel ratio of exhaust gas discharged from an engine body is rich and a period in which the air-fuel ratio of the exhaust gas discharged from the engine body is lean are alternately repeated when the temperature of the second oxidation catalyst is to be increased, so that a part of the unburnt fuel contained in exhaust gas which is discharged from the engine body and whose air-fuel ratio is rich and exhaust gas which is discharged from the engine body and whose air-fuel ratio is lean are mixed in the mixer after passing through the first oxidation catalyst, and the mixed exhaust gases are subject to oxidization in the second oxidation catalyst.

2. An exhaust purification apparatus for an internal combustion engine, according to claim 1, wherein said mixer comprises a turbine of a super charger.

3. An exhaust purification apparatus for an internal combustion engine, according to claim 1, wherein the repetitive control is carried out to control the duration in which the air-fuel ratio of the exhaust gas discharged from the engine body is rich and the degree of the air-fuel ratio of the exhaust gas as well as the duration in which the air-fuel ratio of the exhaust gas discharged from the engine body is lean and the degree of the air-fuel ratio of the exhaust gas, so that the air-fuel ratio of the exhaust gas discharged from the mixer is lean.

4. An exhaust purification apparatus for an internal combustion engine, according to claim 1, further comprising an exhaust treatment device arranged in the exhaust passage on the downstream side of the second oxidation catalyst, said exhaust treatment device comprising at least one of a particulate filter which can trap particulate substances and whose temperature must be increased to burn the accumulated particulate substances and a NOx storage and reduction catalyst which can hold NOx through at least one of storage and adsorption and whose temperature must be increased to emit SOx held with in the NOx through at least one of storage and adsorption.

5. An exhaust purification apparatus for an internal combustion engine, comprising:
a first oxidation catalyst arranged in an exhaust passage of an engine; and
a second oxidation catalyst arranged in the exhaust passage on the downstream side of the first oxidation catalyst and capable of storing an oxygen;
wherein a iterative control is carried out in such a way that a period in which an air-fuel ratio of exhaust gas discharged from an engine body is rich and a period in which the air-fuel ratio of the exhaust gas discharged from the engine body is lean are alternately repeated when the temperature of the second oxidation catalyst is to be increased, so that a part of the unburnt fuel contained in exhaust gas which is discharged from the engine body and whose air-fuel ratio is rich is subject to oxidization with an oxygen stored in the second oxidation catalyst after passing through the first oxidation catalyst.

6. An exhaust purification apparatus for an internal combustion engine, according to claim 5, wherein said iterative control is carried out to control the duration in which the air-fuel ratio of the exhaust gas discharged from the engine body is rich and the degree of the air-fuel ratio of the exhaust gas as well as the duration in which the air-fuel ratio of the exhaust gas discharged from the engine body is lean and the degree of the air-fuel ratio of the exhaust gas, so that the second oxidation catalyst stores an oxygen when the air-fuel ratio of the exhaust gas is lean and oxidizes the almost all of the unburnt fuel entering in the second oxidation catalyst with the stored oxygen when the air-fuel ratio of the exhaust gas is rich.

7. An exhaust purification apparatus for an internal combustion engine, according to claim 5, further comprising an exhaust treatment device arranged in the exhaust passage on the downstream side of the second oxidation catalyst, said exhaust treatment device comprising at least one of a particulate filter which can trap particulate substances and whose temperature must be increased to burn the accumulated particulate substances and a NOx storage and reduction catalyst which can hold NOx through at least one of storage and adsorption and whose temperature must be increased to emit SOx held with in the NOx through at least one of storage and adsorption.
